Europäisches Patentamt

European Patent Office

Office européen des brevets

(11) Publication number: **0 131 286**
**B1**

# EUROPEAN PATENT SPECIFICATION

(45) Date of publication of patent specification: **30.11.88**

(21) Application number: **84107939.5**

(22) Date of filing: **06.07.84**

(51) Int. Cl.⁴: **F 16 J 15/32**

(54) Mechanical seal for sealing slurry liquid.

(30) Priority: **08.07.83 JP 105397/83**
**04.11.83 JP 170125/83**
**28.11.83 JP 182130/83**

(43) Date of publication of application:
**16.01.85 Bulletin 85/03**

(45) Publication of the grant of the patent:
**30.11.88 Bulletin 88/48**

(84) Designated Contracting States:
**DE FR GB SE**

(56) References cited:
**DE-A-2 947 991**
**DE-A-3 021 847**
**US-A-4 296 935**

(73) Proprietor: **TANKEN SEIKO CORPORATION**
**No. 14-15, Yaguchi, 3-chome Ota-ku**
**Tokyo (JP)**

(72) Inventor: **Nagai, Yataro**
**c/o Tanken Seiko Corp. No. 14-15, Yaguchi,**
**3-chome**
**Ota-ku Tokyo (JP)**
Inventor: **Fukuoka, Kazuya**
**c/o Tanken Seiko Corp. No. 14-15, Yaguchi,**
**3-chome**
**Ota-ku Tokyo (JP)**

(74) Representative: **Klingseisen, Franz, Dipl.-Ing.**
**et al**
**Dr. F. Zumstein sen. Dr. E. Assmann Dr. F.**
**Zumstein jun. Dipl.-Ing. F. Klingseisen**
**Bräuhausstrasse 4**
**D-8000 München 2 (DE)**

Courier Press, Leamington Spa, England.

## Description

The invention refers to a mechanical seal for sealing slurry liquid according to the preamble of claim 1.

When sealing a slurry liquid such as a pulp slurry or the like, solid materials invade into a sealing face or clog a spring, and various troubles are caused as imperfect sealing due to abrasions in the sealing face or unsatisfied sliding of a slide ring.

Therefore, the prior art has provided to supply a clean liquid from outside, or to make a structure of a double mechanical seal.

In the case that a clean liquid is poured into the seal, the above mentioned defects are removed, however a new problem arises that the sealing liquid is diluted. On the other hand, when the amount of clean liquid is decreased to avoid said dilution, those defects as above said cannot be solved satisfactorily.

Although the double mechanical seal does not involve a problem of the dilution, the structure thereof is complicated and invites high cost.

It is the object of the present invention to improve a seal according to the preamble of claim 1 in such a way that the sealing effect is improved especially in connection with a slurry liquid.

This object is achieved by the features in the characterizing part of claim 1. Due to the fact that the helical spring is exposed to the liquid this helical spring acts as a pumping element in the same way as the helical circumference of the rotating ring. In this way a strong pumping operation is produceds over the axial length of the ring and the spring away from the sealing face.

DE—A—30 21 847 shows a seal structure with a slide ring. In this known structure a helical spring is covered by a sleeve and not exposed to the liquid so that this helical spring cannot act as a pumping element. Further there is no helical circumference on one of the rotating members of the seal.

DE—A—29 47 991 describes a labyrinth seal in which the grooves of the labyrinth seal can be provided in helical form. However, a labyrinth seal would be clogged by a slurry liquid.

Embodiments according to the invention are described in more detail in connection with the drawings as examples.

Figure 1 is a half cross sectional view showing one embodiment of a mechanical seal according to the invention;

Figure 2 is a front view having set a seat ring, a rotatable slide ring and a spring;

Figure 3 is a front view of a seat ring;

Figure 4 is a front view of a rotatable slide ring;

Figure 5 is a perspective view of a spring;

Figure 6 is a perspective view of a rotary ring restraining the spring provided with vanes;

Figure 7 is a half cross sectional view showing another embodiment of a mechanical seal according to the invention;

Figure 8 is a perspective view of a half-divided taper ring;

Figure 9 is a half cross sectional view of a further embodiment of a mechanical seal according to the invention; and

Figure 10 is a half cross sectional view of an embodiment provided with a flushing device.

In the mechanical seal the spring stopper comprises a rotary ring which is fixedly mounted on the rotary shaft and which is formed with the helical projection on an outer surface thereof. Further a squeeze part is defined by making narrow a space between the outer surface of the rotary ring and an inner surface of the casing corresponding thereto. When the helical projection is rotated in the squeeze part, strong force is actuated within the narrow space toward an apparatus provided with the present mechanical seal, so that solid materials in the slurry liquid are pushed away toward said apparatus, and density of the liquid on the sealing face within the casing is diluted to result in preventing invasion of the solid material into the sealing face.

The spring is a single helical spring mounted on the shaft, a cross section of which is square, not round as conventionally and which is bare in the sealing liquid. That is, the spring per se is shaped helically as a whole, thereby to similarly cause force in the sealing liquid acting in opposition to the sealing face. This force is heightened in comparison with the conventional round cross section by making square the cross section of the spring.

Further the helical projection is provided, and a taper ring is secured to a convex formed within the casing.

In a pump for the slurry, it is ordinarily practised that the casing has the convex on its inside, e.g., a neck bush, which extends toward an inside of a radius direction of the casing. It has been made clear that the convex as said considerably hinders exhausting of the solid materials by the helical projection. In view of such circumstances, a taper ring is disposed on a side perpendicular with an axial direction of the convex at the side of the sealing face, so that the perpendicularity is changed into a taper shape. This taper avoids said hindrance of exhausting the solid materials by the helical projection.

The above mentioned structures may be employed independently or in combination. Any association is optional.

The helical projection may be defined integrally with the rotary body by machining, or fixed by welding.

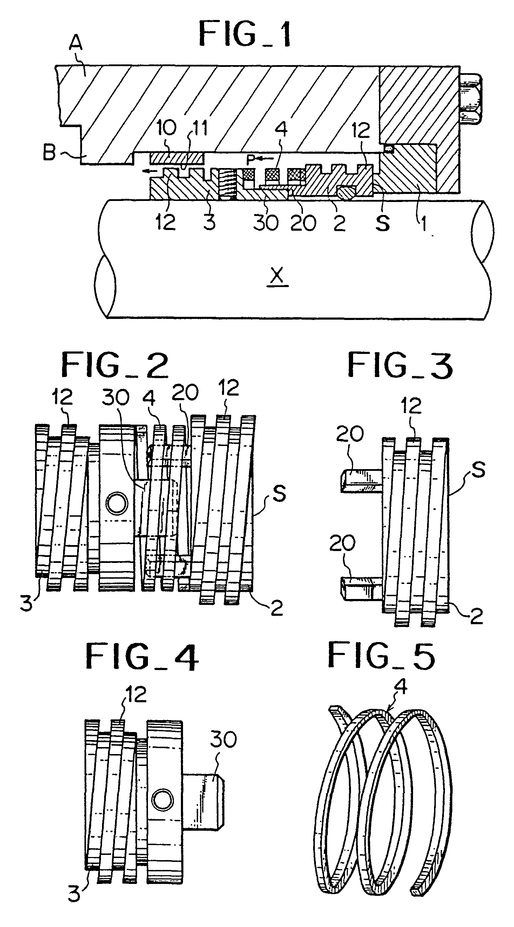

Figure 1 is a half cross sectional view showing an example of a mechanical seal of a slurry pump. In the same, (X) is a rotary shaft, (A) is a casing, and a reference numeral 1 is a fixed ring, 2 and 3 are rotary rings respectively, and 2 is a slide ring and 3 is a collar, and 4 is a

pressing spring. The casing (A) is provided with a convex member 10 in ring shape at a portion thereof corresponds to the collar 3 and is formed with a squeezing part 11 in relation with the collar 3. In this embodiment, the convex member 10 is formed by applying a ring-like bush to the casing (A), and in this regard a probable neck bush (B) positioned at said corresponding portion may be utilized therefor.

The collar 3 is formed with a screw 12 on its outer circumference, such that flowing is effected as an arrow around the squeezing part 11. The screw 12 is provided to cause flowing in the arrow direction due to rotation of the shaft (X).

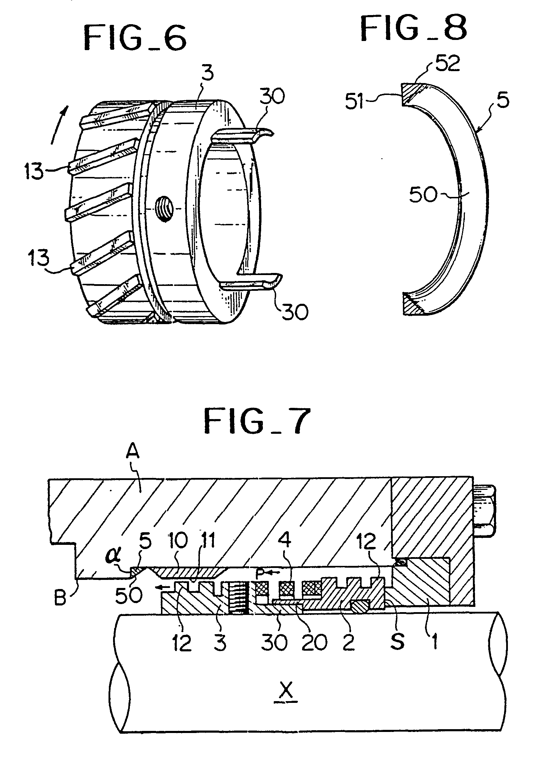

Instead of the screw 12 vanes 13 may be provided as seen in Figure 6. If the vane 13 is made square or trapezoidal in cross section as shown, the solid materials are exhausted more effectively. Further, the vane 13 should be provided in obliquity as shown, not parallel to an axial direction of the collar 3, and may be curved in sprial. The oblique direction depends upon rotating direction of the rotary ring, and is determined in a direction of generating the flow in the arrowed direction in Figure 1.

In the embodiment shown in Figure 1, another screw 12 is also formed on the outer circumference of the follower ring 2 for exhausting solid materials around a sealing face (S). Also in this case, vanes may be employed in place of the screw 12 as shown in Figure 6.

The spring 4 is exposed without shielding its outside, and contacts to the sealing liquid. The shape of its cross section is not round but square as seen in Figures 1 and 5. The present example shows an almost regular square, but may adopt a rectangular or trapezoidal shape for the cross section. A coiling direction of the spring 4 depends upon rotating direction of the rotary ring, and it is determined in a direction of generating the flow in the arrowed direction in Figure 1. But in the present screwing direction, if the rotation is transmitted by the spring 4 from the collar 3 to the ring 2, the spring 4 is effected with force acting in an expanding direction thereof, and such exertion of the spring is not preferable.

In view of such conditions, in this embodiment, the follower 2 and the collar 3 are, as shown in Figures 2 to 4, formed in counterbalance with a plurality of projections 20 and 30 at their bases for transmission of rotating force.

Since the spring 4 spoils the screw pumping effect if its pitch is too wide or too narrow, the pitch should be selected to provide the most desirable pumping effect.

In the above mentioned structure, the pumping function is worked around the squeezing part 11 by the screw 12 or the vanes 13, so that the solid materials existing in a space (P) over the projection 10 to the sealing face (S) move from the convex member 10 toward the apparatus employing the present device. As a result, density of the solid materials in the space (P) is made light, and the solid materials are checked from invasion into the sealing face (S) or clogging into the spring 4.

Since the spring 4 is exposed in the sealing liquid and is made square in cross section, screw-pumping function is largely generated and force is caused in the arrowed direction, and the solid materials as pulps or the like are exhausted from the sealing face (S) and the spring 4. Thus, the solid materials do not go into the sealing face (S) or the spring 4.

In this embodiment, as the slide ring 2 is also formed with the screw 12 or the vanes 13, the solid materials are accelerated in exhausting from the vicinity of the sealing face (S), so that those are more prevented from invading into the sealing face (S).

Figure 7 illustrates a further embodiment. As having referred to, in a pump for the slurry, it is ordinarily practised that the casing (A) has the shoulder (B) on its inside, e.g., a neck bush, which extends toward an inside of a radius direction of the casing (A), and the inventors' experimental studies have made it clear that the shoulder (B) as said considerably hinders said exhausting of the solid materials by the helical projection.

In the present invention, a taper ring 5 is disposed on a side (α) perpendicular to the axial direction of the convex (B) at the side of the sealing face (S) so that the perpendicularity is changed into a taper shape 50 of the taper ring 5. As is seen in a half-divided perspective view of Figure 8, the tape ring 5 is a ring of right-angled triangle in cross section, and composed of two faces 51, 52 intersecting each other and said taper face 50. Said face 51 is closely attached to the perpendicular size (α), and said face 52 is closely attached to the inner circumference of the casing (A), and the taper face 50 is exposed in the sealing liquid in the side of the apparatus.

Due to such a structure, the solid materials are smoothly removed as following the taper face 50 in the arrowed direction by means of the screw 12 or the vanes 13.

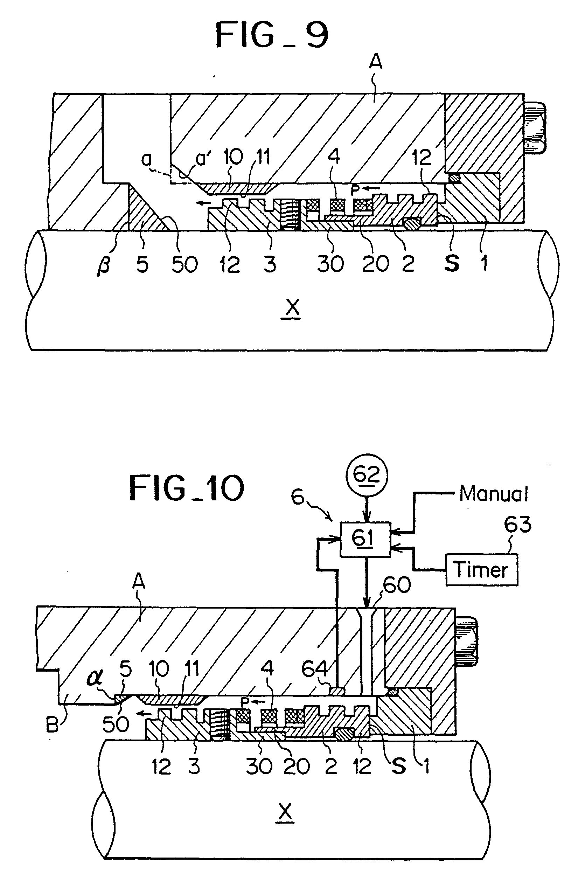

The taper ring 5 can be attached to different positions, and Figure 9 shows an example of attaching the taper ring 5 to a perpendicular face (β) standing to a radius direction from the shaft (X). Further in this example, a corner (a) of the casing (A) is cut out to form a taper face (a'). By cutting the corner, the slurry is exhausted more effectively.

In the above structure, since the taper ring is disposed to the convex, and a side right-angled with the axial direction is cut out, the slurry is got out high efficiency by the screw or the vanes from the mechanical seal portion, and the solid materials are prevented from biting into the sealing face.

The above mentioned structure can prevent invasion of the solid materials without flushing, but addition of the flushing to the structure is preferable.

Figure 10 shows an embodiment providing a flushing device 6. If the flushing is undertaken, in general the sealing liquid is diluted disadvantageously, and therefore the flushing is performed intermittently herein.

A flushing hole 60 is formed in vicinity of the sealing face (S), into which a clean flushing liquid is supplied from a source 62 via a valve 61. The valve 61 is opened per determined time so as to supply the flushing liquid intermittently. Said opening may depend upon manual operation or a timer 63. Furthermore, it is considered that a rising temperature of the slurry is detected by a thermometer 64 to open the valve 61 when the temperature rises above determination. Or, the above mentioned means may be used simultaneously.

The flushing liquid from the hole 60 pushes aside the slurry liquid around the sealing face (S), so that the slurry is avoided from staying or clogging and from overheating by cooling effect thereby at the same time. Since the flushing liquid is supplied intermittently, the slurry is not diluted.

**Claims**

1. A mechanical seal for sealing slurry liquid comprising, a seat ring (1), a rotatable slide ring (2) which is positioned in a casing (A) and abuts against the seat ring (1) to form a sealing face, a helical spring (4) which is positioned in the casing (A) and pushes the rotatable slide ring (2) to the seat ring (1), a rotatable ring (3) secured on a shaft (X) and positioned in the casing for holding the spring (4), characterized in that at least one of the rotatable rings (2, 3) is provided with a helical circumference (12), that said helical spring (4) is exposed to the liquid in the seal, and that said helical circumference (12) and the helical spring (4) upon rotation of the shaft (X), produce a force causing the liquid in the seal to be driven in a direction away from the sealing face.

2. Mechanical seal according to claim 1, characterized in that the helical spring (4) has a square shaped cross section.

3. Mechanical seal according to claim 1 comprising a projection (B) projecting radially inwardly on the casing (A), characterized in that a taper ring (5) is provided on the projection on the side of the sealing.

4. Mechanical sealing according to claims 1 to 3, characterized in that a flushing device (61, 62) is provided which intermittantly flushes a portion around the sealing face with flushing liquid.

5. Mechanical seal according to the preceding claims, characterized in that the rotatable slide ring (2) is engaged with ring (3) secured on the shaft (X).

6. Mechanical seal according to the preceding claims, characterized in that a space between the casing (A) and the rotatable ring (3) on the inner side of the sealing is reduced.

**Patentansprüche**

1. Mechanische Dichtung zum Abdichten von schlammiger Flüssigkeit, mit einem Sitzring (1), einem drehbaren Gleitring (2), der in einem Gehäuse (A) angeordnet ist und zur Ausbildung einer Dichtfläche am Sitzring (1) anliegt, einer Schraubenfeder (4), die in dem Gehäuse (A) angeordnet ist und den drehbaren Gleitring (2) an den Sitzring (1) andrückt, einem drehbaren Ring (3), der auf einer Welle (X) befestigt ist und zum Halten der Feder (4) im Gehäuse angeordnet ist, dadurch gekennzeichnet, daß wenigstens einer der drehbaren Ringe (2, 3) mit einem schraubenlinienförmigen Umfang (12) versehen ist, daß die Schraubenfeder (4) gegenüber der Flüssigkeit in der Dichtung freiliegt, und daß der schraubenlinienförmige Umfang (12) und die Schraubenfeder (4) bei Drehung der Welle (X) eine Kraft erzeugen, die die Flüssigkeit in der Dichtung in eine Richtung weg von der Dichtfläche treibt.

2. Mechanische Dichtung nach Anspruch 1, dadurch gekennzeichnet, daß die Schraubenfeder (4) eine quadratische Querschnittsform hat.

3. Mechanische Dichtung nach Anspruch 1, mit einem Vorsprung (B), der radial nach innen am Gehäuse (A) vorsteht, dadurch gekennzeichnet, daß ein abgeschrägter Ring (5) an dem Vorsprung auf der Seite der Dichtung vorgesehen ist.

4. Mechanische Dichtung nach den Ansprüche 1 bis 3, dadurch gekennzeichnet, daß eine Spüleinrichtung (61, 62) vorgesehen ist, die intermittierend einen Abschnitt um die Dichtfläche mit Spülflüssigkeit spült.

5. Mechanische Dichtung nach den vorhergehenden Ansprüchen, dadurch gekennzeichnet, daß der drehbare Gleitring (2) mit dem Ring (3) in Eingriff steht, der auf der Welle (X) befestigt ist.

6. Mechanische Dichtung nach den vorhergehenden Ansprüchen, dadurch gekennzeichnet, daß ein Raum zwischen den dem Gehäuse (A) und dem drehbaren Ring (3) auf der Innenseite der Dichtung verengt ausgebildet ist.

**Revendications**

1. Joint mécanique pour l'étanchement d'un liquide boueux comprenant, un anneau d'appui (1), un anneau rotatif et de glissement (2) disposé dans un boîtier (A) et qui vient buter contre l'anneau d'appui (1) pour former une face d'étanchement, un ressort hélicoïdal (4) qui est disposé dans le boîtier (A) et pousse l'anneau rotatif et de glissement (2) vers l'anneau d'appui (1), un anneau rotatif (3) fixé à un arbre (X) et disposé dans le boîtier pour maintenir le ressort (4), caractérisé en ce que l'un au moins des anneaux rotatifs (2, 3) est muni d'une circonférence hélicoïdale (12), ledit ressort hélicoïdal (4) est exposé au liquide dans le joint, et ladite circonférence hélicoïdale (12) et le ressort hélicoïdal (4), lors de la rotation de l'arbre (X), produisent une force qui amène le liquide contenu dans le joint à être entraîné dans une direction l'éloignant de la face d'étanchement.

2. Joint mécanique selon la revendication 1, caractérisé en ce que le ressort hélicoïdal (4) a une section transversale de forme carrée.

3. Joint mécanique selon la revendication 1, comprenant une saillie (B) faisant saillie radialement à l'intérieur du boîtier (A), caractérisé en ce que un anneau conique (5) est prévu sur la saillie, sur le côté de l'étanchement.

4. Joint mécanique selon les revendications 1 à 3, caractérisé en ce que un dispositif de lavage (61, 62) est prévu, qui lave de façon intermittente une partie située autour de la face d'étanchement au moyen d'un liquide de lavage.

5. Joint mécanique selon les revendications précédentes, caractérisé en ce que l'anneau rotatif et de glissement (2) est en contact avec l'anneau (3) fixé sur l'arbre (X).

6. Joint mécanique selon les revendications précédentes, caractérisé en ce que l'espace entre le boîtier (A) et l'anneau rotatif (3) sur le côté interne du joint est réduit.

# FIG_1

A
B
10  11  4  12
P
12  3  30  20  2  S  1
X

# FIG_2

12  30  4  20  12
S
3  2

# FIG_3

20  12
20
S
20
2

# FIG_4

12
30
3

# FIG_5

4

## FIG_6

## FIG_8

## FIG_7

# FIG_9

A

a  a'  10  11  4  12

P

β  5  50  12  3  30  20  2  S  1

X

# FIG_10

62

6  Manual

61  63

Timer

A

60

α  5  10  11  4  64

B

50  P

12  3  30  20  2  12  S  1

X